# EUROPEAN PATENT APPLICATION

(11) **EP 3 741 582 A1**
(43) Date of publication of application: **25.11.2020**
(21) Application number: 20174791.2
(22) Date of filing: 14.05.2020
(51) Int. Cl.: B60C 11/01, B60C 13/02

(54) **TIRE WITH SHOULDER STRUCTURE**

(30) Priority: 23.05.2019 US 201916420491
(71) Applicant: The Goodyear Tire & Rubber Company, Akron, OH 44316 (US)
(72) Inventor: DIGMAN, Brian David, Sagamore Hills, OH 44067 (US); LEYSSENS, Jan Frans, B-6860 Leglise-Beheme (BE); MOIA, Robin, L-3352 Leudelange (LU); REICHLING, Gilles, L-9189 Vichten (LU); PLETSCHETTE, Pascal, L-7346 Mullendorf (LU)
(74) Representative: Goodyear IP Law

(57) **Abstract**

A tire (1) is disclosed comprising a tread portion (2) for contacting a road surface, two shoulder portions (3) on each axial side of the tread portion (2), two sidewall portions (4) extending radially inward from the shoulder portions (3), two hoop-shaped bead portions (5) and a carcass layer (6) folded over the bead portions (5) from an axially inner side to an axially outer side of the tire (1) thus stretching the carcass layer (6) into a toroidal shape in the circumferential direction of the tire (1). The tire (1) further has (i) one of the shoulder portions (3) including a longitudinal groove (305), a longitudinal land portion (307) extending axially from the longitudinal groove (305), and a spur-like protrusion (309) extending radially outward and axially outward from the longitudinal land portion (307); or (ii) one of the shoulder portions (3) including a step-like transition portion (405) from the tread portion (2) to a radially recessed portion (407) and toward the sidewall portion (4); or (iii) one of the shoulder portions (3) including a preferably radially recessed portion (407).

## Description

### Field of Invention

The present invention relates to a pneumatic or non-pneumatic tire and, particularly, a tire shoulder structure for improving air flow around the tire during use.

### Background of the Invention

Traveling performance of a vehicle needs to be enhanced. Thus, various performances of tires also need to be enhanced, including fuel economy performance of tires. Lowering air drag on the tires may increase the fuel economy performance of the tires and the vehicle.

One conventional tire includes a plurality of tire protrusions and/or a plurality of tire recesses on a tire side portion, or tread shoulder, that constitutes a vehicle outer side. The tire may generate a suitable turbulent flow about the surface of the vehicle outer side (the surface of the vehicle outer side of the pneumatic tire). Aerodynamic performance may thus be enhanced dramatically over cases where the area was simply increased where the protrusions and/or recesses are provided. The tire protrusions and/or recesses may be disposed in a partial angular range in a tire circumferential direction. Thereby, turbulent air flow may be suitably generated and the aerodynamic performance enhanced. Additionally, the tire protrusions and/or recesses may constitute a plurality of rows formed in the tire radial direction disposed at a predetermined pitch in the tire circumferential direction.

### Summary of the Invention

The invention relates to a tire in accordance with claim 1.

Dependent claims refer to preferred embodiments of the invention.

A first tire in accordance with a preferred aspect of the present invention includes a tread portion for contacting a road surface, two shoulder portions on each axial side of the tread portion, two sidewall portions extending radially inward from the shoulder portions, two hoop-shaped bead portions, and a carcass layer folded over the bead portions from an axially inner side to an axially outer side of the tire thus stretching the carcass layer into a toroidal shape in the tire circumferential direction of the first tire. One of the shoulder portions includes a recessed portion for modifying air flow about the one shoulder portion.

According to a preferred aspect of the first tire, the one shoulder portion includes a spur-like protrusion extending radially outward and axially outward from the one shoulder portion.

According to another preferred aspect of the first tire, the one shoulder portion includes a step-like transition from the tread portion to the radially recessed portion.

According to yet another preferred aspect of the first tire, the other shoulder portion includes a spur-like protrusion extending radially outward and axially outward from the one shoulder portion.

According to still another preferred aspect of the first tire, the other shoulder portion includes a step-like transition from the tread portion to the radially recessed portion.

According to yet another preferred aspect of the first tire, the one shoulder portion includes a lug groove extending axially into the radially recessed portion.

According to still another preferred aspect of the first tire, the one shoulder portion includes a lug groove extending axially toward the radially recessed portion to a blind end.

A second tire in accordance with a preferred aspect of the present invention includes a tread portion for contacting a road surface, two shoulder portions on each axial side of the tread portion, two sidewall portions extending radially inward from the shoulder portions, two hoop-shaped bead portions, and a carcass layer folded over the bead portions from an axially inner side to an axially outer side of the tire thus stretching the carcass layer into a toroidal shape in the tire circumferential direction of the second tire. One of the shoulder portions includes a longitudinal groove, a longitudinal land portion extending axially from the longitudinal groove, and a spur-like protrusion extending radially outward and axially outward from the longitudinal land portion.

According to a preferred aspect of the second tire, the other shoulder portion includes a spur-like protrusion extending radially outward and axially outward from the one shoulder portion.

According to another preferred aspect of the second tire, the other shoulder portion includes a step-like transition from the tread portion to the radially recessed portion.

According to yet another preferred aspect of the second tire, the one shoulder portion includes a lug groove extending axially into the longitudinal groove.

According to still another preferred aspect of the second tire, the one shoulder portion includes a lug groove extending axially toward the longitudinal groove to a blind end.

A third tire in accordance with a preferred aspect of the present invention includes a tread portion for contacting a road surface, two shoulder portions on each axial side of the tread portion, two sidewall portions extending radially inward from the shoulder portions, two hoop-shaped bead portions, and a carcass layer folded over the bead portions from an axially inner side to an axially outer side of the tire thus stretching the carcass layer into a toroidal shape in the tire circumferential direction of the third tire. One of the shoulder portions includes a step-like transition from the tread portion to a radially recessed portion and toward the sidewall portions.

According to a preferred aspect of the third tire, the other shoulder portion includes a spur-like protrusion extending radially outward and axially outward from the one shoulder portion.

According to another preferred aspect of the third tire, the other shoulder portion includes a step-like transition from the tread portion to the radially recessed portion.

According to yet another preferred aspect of the third tire, the one shoulder portion includes a lug groove extending axially into the radially recessed portion.

According to still another preferred aspect of the third tire, the one shoulder portion includes a lug groove extending axially toward the radially recessed portion to a blind end.

### Definitions

"Aspect ratio" means the ratio of a tire section height to its section width.
"Aspect ratio of a bead cross-section" means the ratio of a bead section height to its section width.
"Asymmetric tread" means a tread that has a tread pattern not symmetrical about the center plane or equatorial plane EP of the tire.
"Axial" and "axially" refer to lines or directions that are parallel to the axis of rotation of the tire.
"Circumferential" and "circumferentially" mean lines or directions extending along the perimeter of the surface of the annular tire parallel to the equatorial plane (EP) and perpendicular to the axial direction.
"Equatorial plane (EP)" means the plane perpendicular to the tire's axis of rotation and passing through the center of its tread; or the plane containing the circumferential centerline of the tread.
"Groove" means an elongated void area in a tread that may extend circumferentially or laterally about the tread in a straight, curved, or zigzag manner. Circumferentially and laterally extending grooves sometimes have common portions. The "groove width" may be the tread surface occupied by a groove or groove portion divided by the length of such groove or groove portion; thus, the groove width may be its average width over its length. Grooves may be of varying depths in a tire. The depth of a groove may vary around the circumference of the tread, or the depth of one groove may be constant but vary from the depth of another groove in the tire. If such narrow or wide grooves are of substantially reduced depth as compared to wide circumferential grooves, which they interconnect, they may be regarded as forming "tie bars" tending to maintain a rib-like character in the tread region involved. As used herein, a groove is intended to have a width large enough to remain open in the tires contact patch or footprint.
"Inboard side" means the side of the tire nearest the vehicle when the tire is mounted on a wheel and the wheel is mounted on the vehicle.
"Load range" means load and inflation limits for a given tire used in a specific type of service as defined by tables in The Tire and Rim Association, Inc.
"Normal load" means the specific design inflation pressure and load assigned by the appropriate standards organization for the service condition for the tire.
"Outboard side" means the side of the tire farthest away from the vehicle when the tire is mounted on a wheel and the wheel is mounted on the vehicle.
"Radial" and "radially" mean directions radially toward or away from the axis of rotation of the tire.
"Section height" means the radial distance from the nominal rim diameter to the outer diameter of the tire at its equatorial plane.
"Section width" means the maximum linear distance parallel to the axis of the tire and between the exterior of its sidewalls when and after it has been inflated at normal pressure for 24 hours, but unloaded, excluding elevations of the sidewalls due to labeling, decoration or protective bands.
"Sidewall" means that portion of a tire between the tread and the bead.
"Tread" means a molded rubber component which, when bonded to a tire casing, includes that portion of the tire that comes into contact with the road when the tire is normally inflated and under normal load.
"Tread width" means the arc length of the tread surface in a plane including the axis of rotation of the tire.

### Brief Description of the Drawings

The present invention will be described by way of example and with reference to the accompanying drawings, in which:
FIG. 1 is a schematic meridian cross-sectional view of an example tire for use with the present invention.
FIG. 2 is a schematic meridian cross-sectional view of another example tire for use with the present invention.
FIG. 3 is a schematic partial perspective view of a tread shoulder in accordance with the present invention.
FIG. 4 is another schematic partial perspective view of the tread shoulder of FIG. 3.
FIG. 5 is a schematic partial perspective view of another tread shoulder in accordance with the present invention.
FIG. 6 is another schematic partial perspective view of the tread shoulder of FIG. 5.

### Detailed Description of Examples of the Present Invention

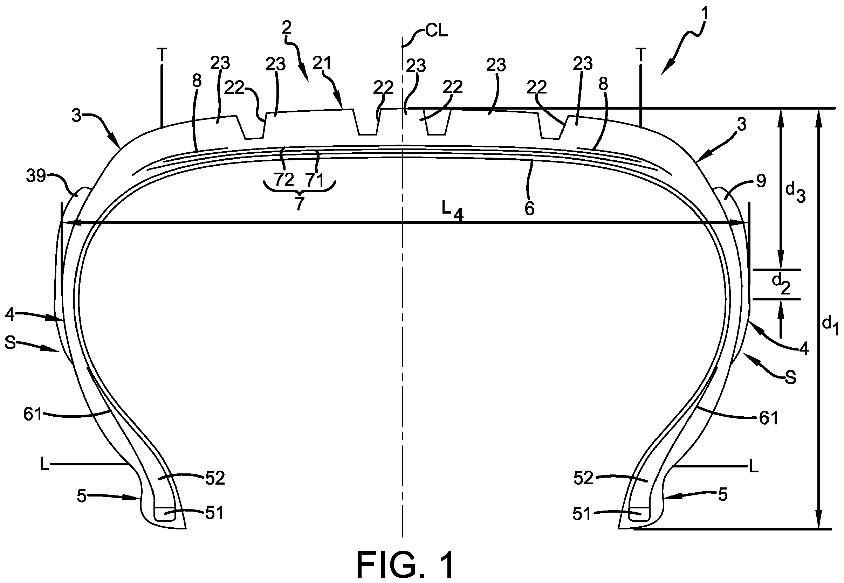

Examples of the present invention are described below in detail based on FIGS. 1-6. However, the present invention is not limited to these examples. The constituents of the examples may be replaced by those of ordinary skill in the art with similar alternate constituents. Furthermore, constituents of the examples may be freely combined within a scope of obviousness for a person of ordinary skill in the art.

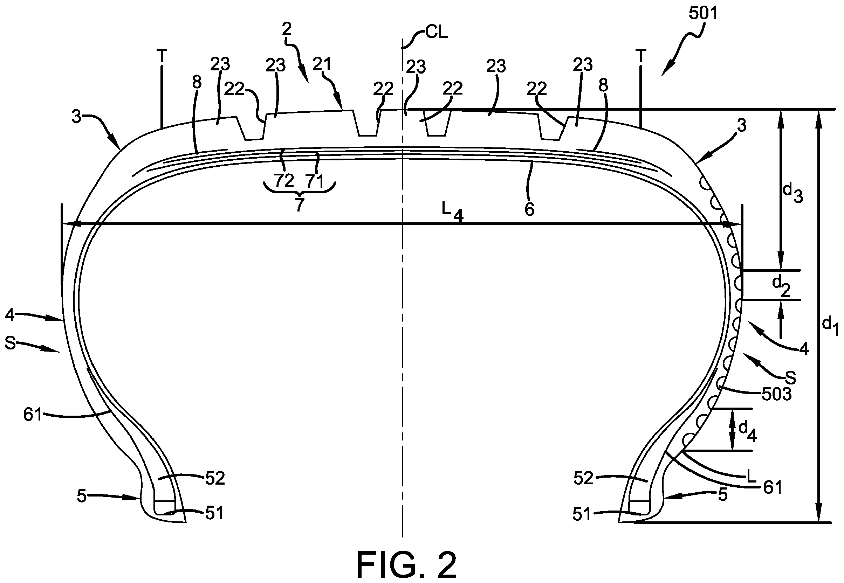

FIG. 1 is a schematic meridian cross-sectional view of an example pneumatic tire 1 for use with the present invention. FIG. 2 is a schematic meridian cross-sectional view of another example pneumatic tire 501 for use with the present invention. Such example tires 1, 501 are described in US 9,132,694.

As illustrated in FIG. 1, the example pneumatic tire 1 includes a tread portion 2, shoulder portions 3 on both sides of the tread portion 2, a side wall portion 4 and a bead portion 5 continuing sequentially radially inward from each of the shoulder portions 3. The pneumatic tire 1 further includes a carcass layer 6, a belt layer 7, and a belt reinforcing layer 8. When in use, each of the bead portions 5 of the pneumatic tire 1 are mounted on a rim portion of a wheel of a vehicle. A gas (e.g., air or nitrogen) is injected into a tire internal space, or tire cavity, defined by the pneumatic tire 1 and the rim portion of the wheel.

The tread portion 2 is formed from a rubber material and is exposed on the outermost side in the tire axial direction of the pneumatic tire 1. A tread surface 21 is formed on a peripheral surface of the tread portion 2 or, rather, on a road contact surface that contacts a road surface when traveling. The tread surface 21 extends along the tire circumferential direction and, for example, four straight main grooves 22 parallel with an equatorial plane CL of the pneumatic tire 1.

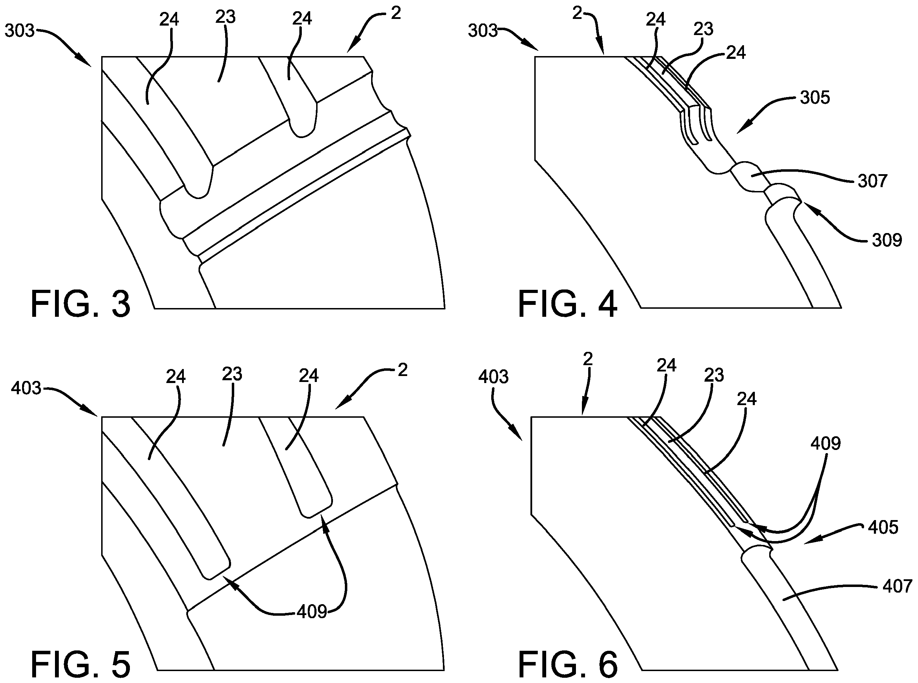

A plurality of rib-like land portions 23, extending along the tire circumferential direction and parallel with the equatorial plane CL, are formed in the tread surface 21 by the plurality of main grooves 22. Transverse lug grooves 24 (FIGS. 3-6) may intersect with the main grooves 22 in each of the land portions 23 in the tread surface 21. The land portions 23 may be plurally divided in the tire circumferential direction by the lug grooves 24. The lug grooves 24 may open to an axially outer side of the tire 1 (FIGS. 3-4) or be closed before reaching the axially outer side of the tire (FIGS. 5-6). Further, the lug grooves 24 may communicate with the main grooves 22 or may be closed and not communicate with the main grooves.

The shoulder portions 3 are disposed on both axially outer sides of the tire 1 (FIGS. 3-6, one shown). The side wall portions 4 are disposed at the axially outer sides of the tire 1. The bead portions 5 may include a bead core 51 and a bead filler 52. The bead core 51 may be formed by winding a steel wire (e.g., bead wire, etc.) in a ring-like manner. The bead filler 52 may be a rubber material disposed in two spaces formed by ends 61 of the carcass layer 6 being folded or turned up at the bead cores 51.

The ends 61 of the carcass layer 6 may be folded over the pair of bead cores 51 from the axially inner side to the axially outer side of the tire 1 thus stretching the carcass layer into a toroidal shape in the tire circumferential direction of the tire. The carcass layer 6 may be formed by a plurality of carcass cords (not shown) juxtaposed in the tire circumferential direction along the tire meridian direction having a given angle with respect to the tire circumferential direction (e.g., from 85 degrees to 95 degrees) and covered by a coating rubber. The carcass cords may be formed from organic fibers (e.g. polyester, rayon, nylon, etc.) and/or steel.

The belt layer 7 may have a multi-layer structure where preferably at least two layers (belts 71 and 72) are radially stacked. The belt layer 7 may be disposed on a radially outer side in of the carcass layer 6 and under a radially inner side of the tread portion 2. The belts 71 and 72 may be constituted by a plurality of cords (not shown) juxtaposed at a predetermined angle with respect to the tire circumferential direction (e.g., from 20 degrees to 30 degrees) and covered by a coating rubber. The cords of the belt layer 7 may be formed from steel or organic fibers (e.g., polyester, rayon, nylon, etc.). The overlapping belts 71 and 72 may be disposed such that the cords thereof mutually cross.

The belt reinforcing layer 8 is disposed on a radially outer side of the belt layer 7. The belt reinforcing layer 8 may be constituted by a plurality of cords (not shown) juxtaposed substantially parallel (plus or minus 0.5 degrees) to the tire circumferential direction and covered by a coating rubber. The cords may be formed from steel or organic fibers (e.g., polyester, rayon, nylon, etc.). The example belt reinforcing layer 8 shown in FIGS. 1-2 may be disposed at two axially and radially outer portions of the belt layer 7. Alternatively, the belt reinforcing layer 8 may cover an entirety of the radially outer side of the belt layer 7. The belt reinforcing layer 8 may be formed by winding a band-like strip (e.g. with a width of 10 mm) in the tire circumferential direction.

In cases where the pneumatic tire 1 of these examples (FIGS. 1-2) is mounted on a vehicle (not shown), orientations with respect to an inner side and an outer side of the tire 1 may be designated. The orientation designations, for example, may be indicated on the side wall portions 4 (not shown). Hereinafter, a side of the tire 1 facing the inner side of the vehicle, when mounted on the vehicle, may be referred to as a "vehicle inner side" and a side of the tire facing the outer side of the vehicle may be referred to as a "vehicle outer side". Designations of the vehicle inner side and the vehicle outer side may not be limited to cases when mounted on a vehicle. For example, in cases when assembled on a rim, orientation of the rim with respect to the inner side and the outer side of the vehicle may be set. Therefore, in cases when the pneumatic tire 1 is assembled on a rim, the orientation with respect to the inner side (vehicle inner side) and the outer side (vehicle outer side) of the tire 1 may be designated.

As shown in FIG. 1, a plurality of protrusions 9, axially protruding from the surface of the tire side portion S toward the outer side of the tire 1, are provided on the tire side portion S of the vehicle outer side. Here, the "tire side portion S" refers to, in FIG. 3, the outer side in the tire width direction from a ground contact edge T of the tread portion 2 or, in other words, a surface that uniformly continues in a range of the outer side in the tire radial direction from a rim check line L. The "ground contact edge T" refers to both axially outermost edges of the tread surface 21 contacting the road surface when the tire 1 is assembled on a regular rim and filled with regular inner pressure and 70 percent of a regular load is applied. The ground contact edge T thereby continues in the tire circumferential direction. The "rim check line L" may refer to a line used to confirm whether the tire 1 has been assembled on the rim correctly and, typically, is an annular convex line closer to the outer side in the tire radial direction than a rim flange and continues in the tire circumferential direction along a portion adjacent to the rim flange on a front side surface of the bead portions 5.

The tire protrusions 9 are formed as protrusions formed from a rubber material (may be the rubber material forming the tire side portion S or a rubber material different from the rubber material) formed with a longitudinal shape in the tire radial direction in a range of the tire side portion S, and are disposed in the tire circumferential direction at a predetermined pitch.

Additionally, as illustrated in FIG. 1, a plurality of protrusions 39 axially extending from the surface of the tire side portion S may be provided on the tire side portion S of the vehicle inner side. The tire protrusions 39 may be formed from a rubber material (may be the rubber material forming the tire side portion S or a rubber material different from the rubber material) having a longitudinal shape in the tire radial direction in a range of the tire side portion S, and may be disposed in the tire circumferential direction at a predetermined pitch.

FIG. 2 shows a meridian cross-sectional view of another example tire 501 for use with the present invention. The tire 501 is similar to the tire 1 of FIG. 1 except that tire recesses 503 replace the tire protrusions 9. Identical structures are given the same reference designations as FIG. 1. A plurality of tire recesses 503 are formed in the tire side portion S of the pneumatic tire 501.

The tire recesses 503 are disposed in a range of the tire side portion S at a predetermined pitch in the tire radial direction and the tire circumferential direction. The tire recesses 503 are preferably disposed in rows in the tire radial direction and the tire circumferential direction, respectively. One tire recess row may be formed from a plurality of the tire recesses 503 of the tire recesses disposed in a row in the tire radial direction. Additionally, because a plurality of the tire recesses 503 may be disposed in rows in the tire circumferential direction, the recess rows may have a configuration in which the recess rows are disposed in the tire circumferential direction.

Note that in FIG. 2, the tire recesses 503 are provided in only the tire side portion S of the vehicle outer side but may also be provided on the vehicle inner side (not shown).

Thus, air flow turbulence may be enhanced in the vicinity of the tire 501 due to the tire recesses 503. The air flow that flows on the side surface of the tire 501 may thus be converted to a state that flows easily along the side surface S in the vicinity of the tire 501. The air flow may thereby be retained as-is in the vicinity of the side surface S of the tire 501.

As described above, air resistance, or drag, is reduced and fuel economy is enhanced even when the tire protrusions are replaced with the tire recesses 503 of the tire 501.

Additionally, with the pneumatic tire 501, the tire recesses 503 reduce rubber volume and heat dissipation is improved due to enhancing the air turbulence while heat generation is suppressed. Therefore, tire heat buildup and temperature increases may also be suppressed.

The tire recesses 503 and the tire protrusions 9 may be formed in the same region of the tire side portion S. For example, at least a portion of the tire recesses 503 may be positioned apart from at least 10% or more of a tire cross-sectional height from a position where a tire cross-sectional width of the pneumatic tire 501 is greatest (position of maximum cross-sectional width L₄) toward the outer side in the tire radial direction. That is, where d₁ is the tire cross-sectional height of the pneumatic tire 501, at least a portion of the tire recesses 503 may be formed in a region corresponding to a height d₃ farther outward in the tire radial direction than an edge of the outer side in the tire radial direction of a region corresponding to a height d₂ that is 10% of the tire cross-sectional height d₁ from a position where the tire cross-sectional width is greatest.

At least a portion of the tire recesses 503 may be disposed in a region from a rim check line to a position separated 10% of the tire cross-sectional height starting from the rim check line toward the outer side in the tire radial direction or, rather, the region corresponding to a height d₄. By disposing a portion of the tire recesses 503 in the region corresponding to the height d₄, heat dissipation in the pneumatic tire 501 may be further enhanced and air resistance may be reduced while suppressing heat buildup.

As shown in FIGS. 3-4, a first shoulder portion 303 in accordance with the present invention replaces the shoulder portions 3 of the tire 1 or the tire 501 of FIGS. 1-2. The first shoulder portion 303 includes a longitudinal groove 305, a longitudinal land portion 307 extending axially from the longitudinal groove, and a spur-like protrusion 309 extending radially outward and axially outward from the longitudinal land portion. The first shoulder portion 303 produces an air flow enhancement similar to the protrusions 9 (FIG. 1) and recesses 503 (FIG. 2) described above. The first shoulder portion 303 thus creates desired air flow by modifying the transition from the cylindrical tread portion 2 radially inward toward the side surface(s) S of the tire 1 or 501. The lug grooves 24 preferably axially extend into the longitudinal groove 305.

As shown in FIGS. 5-6, a second shoulder portion 403 in accordance with the present invention replaces the shoulder portions 3 of the tire 1 or the tire 501 of FIGS. 1-2. The second shoulder portion 403 includes a step-like transition 405 from the tread portion 2 to a radially recessed portion 407 and toward the side surface(s) S of the tire 1 or 501. The second shoulder portion 403 also produce an air flow enhancement similar to the protrusions 9 (FIG. 1) and recesses 503 (FIG. 2) described above. The second shoulder portion 303 thus create desired air flow by modifying the transition from the cylindrical tread portion 2 radially inward toward the side surface(s) S of the tire 1 or 501. The lug grooves 24 axially extend to blind ends 409 axially inward from the step-like transition 405.

## Claims

1. A tire comprising a tread portion (2) for contacting a road surface, two shoulder portions (3) on each axial side of the tread portion (2), two sidewall portions (4) extending radially inward from the shoulder portions (3), two hoop-shaped bead portions (5) and a carcass layer (6) folded over the bead portions (5) from an axially inner side to an axially outer side of the tire (1) thus stretching the carcass layer (6) into a toroidal shape in the circumferential direction of the tire (1), and wherein
(i) one of the shoulder portions (3) includes a longitudinal groove (305), a longitudinal land portion (307) extending axially from the longitudinal groove (305), and a spur-like protrusion (309) extending radially outward and axially outward from the longitudinal land portion (307); or
(ii) one of the shoulder portions (3) includes a step-like transition portion (405) from the tread portion (2) to a radially recessed portion (407) and toward the sidewall portion (4); or
(iii) one of the shoulder portions (3) includes a preferably radially recessed portion (407).

2. The tire of claim 1 wherein at least one or more of the recessed portion (407), the spur-like protrusion (309) and the step-like transition portion (405) is configured for modifying air flow about the one shoulder portion (3).

3. The tire as set forth in claim 1 or 2 wherein the tire (1) has the feature (iii) and one shoulder portion (3), namely preferably said shoulder portion (3) or the respective other shoulder portion (3), includes a spur-like protrusion (309) extending radially outward and axially outward from the respective shoulder portion (3).

4. The tire as set forth in claim 1 or 2 wherein the tire (1) has the feature (iii) and one shoulder portion (3), namely said shoulder portion (3) or preferably the respective other shoulder portion (3), includes a step-like transition portion (405) from the tread portion (2) to the preferably radially recessed portion (407).

5. The tire as set forth in claim 1 or 2 wherein the tire (1) has the feature (iii) and one shoulder portion (3), namely preferably said shoulder portion (3) or the respective other shoulder portion (3), includes a lug groove (24) extending axially into the preferably radially recessed portion (407).

6. The tire as set forth in claim 1 or 2 wherein the tire (1) has the feature (iii) and one shoulder portion (3), namely preferably said shoulder portion (3) or the respective other shoulder portion (3), includes a lug groove (24) extending axially toward the preferably radially recessed portion (407) to a blind end (409).

7. The tire as set forth in claim 1 or 2 wherein the tire (1) has the feature (i) and the other shoulder portion (3) includes a spur-like protrusion (309) extending radially outward and axially outward from the shoulder portion (3).

8. The tire as set forth in claim 1 or 2 wherein the tire (1) has the feature (i) and the other shoulder portion (3) includes a step-like transition portion (405) from the tread portion (2) to a preferably radially recessed portion (407).

9. The tire as set forth in claim 1 or 2 wherein the tire (1) has the feature (i) and one shoulder portion (3), namely preferably said shoulder portion (3) or the respective other shoulder portion (3), includes a lug groove (24) extending axially into the longitudinal groove (305).

10. The tire as set forth in claim 1 or 2 wherein the tire (1) has the feature (i) and one shoulder portion (3), namely preferably said shoulder portion (3) or the respective other shoulder portion (3), includes a lug groove (24) extending axially toward the longitudinal groove (305) to a blind end (409).

11. The tire as set forth in claim 1 or 2 wherein the tire (1) has the feature (ii) and the other shoulder portion (3) includes a spur-like protrusion (309) extending radially outward and axially outward from the shoulder portion (3).

12. The tire as set forth in claim 1 or 2 wherein the tire (1) has the feature (ii) and the other shoulder portion (3) includes a step-like transition portion (405) from the tread portion (2) to the radially recessed portion (407).

13. The tire as set forth in claim 1 or 2 wherein the tire (1) has the feature (ii) and one shoulder portion (3), namely preferably said shoulder portion (3) or the respective other shoulder portion (3), includes a lug groove (24) extending axially into the radially recessed portion (407).

14. The tire as set forth in claim 1 or 2 wherein the tire (1) has the feature (ii) and one shoulder portion (3), namely preferably said shoulder portion (3) or the respective other shoulder portion (3), includes a lug groove (24) extending axially toward the radially recessed portion(407) to a blind end (409).
